# EUROPEAN PATENT SPECIFICATION

(11) **EP 3 191 320 B1**
(45) Date of publication and mention of the grant of the patent: **11.12.2019**
(21) Application number: 15771281.1
(22) Date of filing: 03.09.2015
(51) Int. Cl.: B60D 1/14, B60D 1/145

(54) **SUSPENSION**
SUSPENSION
SUSPENSION

(30) Priority: 12.09.2014 DK 201400519
(43) Date of publication of application: 19.07.2017
(73) Proprietor: Sidis Robotics ApS, 6400 Sønderborg (DK)
(72) Inventor: LOTT, Kenneth Skovbo, DK-6400 Sønderborg (DK)
(74) Representative: Inspicos P/S
(86) International application number: PCT/IB2015/056686
(87) International publication number: WO 2016/038512

(56) References cited:
- FR-E- 22 804
- US-B1- 6 497 422

## Description

### BACKGROUND

The present invention relate to a balanced suspension especially suitable to suspend a tool to a vehicle where said tool is to operate in connection to a changing surface, such as a terrain. The suspension is capable of letting the tool follow the changing surface and to adapt to a change tool with a different weight and / or weight distribution, size etc., such that the tool operates in connection with the changing surface / terrain in a balanced manner. In the following example of description the vehicle is an automatically operating lawn mower (robotic lawn mower) with one or more cutters forming the tools suspended to the vehicle, but the balanced suspension according to the present invention may just as well be used for a wide range of other systems, especially within the field of agriculture or energy harvesting.

As the combined length of vehicle, suspension and tool(s) often will be at a substantial larger scale than the changes in the surface whereon it operates it is essential to keep the tool in a balanced connection to the surface, such as the cutters mowing a lawn with grass then it is essential to keep the cutters close to the surface of the ground, or terrain, in order to obtain a nice uniform cut of the grass. The suspension therefore needs to be able to adapt to the changes as the vehicle moves along with the cutters. The suspension further needs to be able to balance the tools (such as cutters) according to their weight and / or weight distribution, size etc., if underbalanced the tools becomes 'nose-heavy' and tends to sink into the surface ground, whereas if overbalanced the tools becomes to light and may easily be lifted shortly from the ground due to e.g. bumps. The balance therefore needs to be correct to ensure the cutters to be kept at a substantially constant distance to the surface ground of the changing surface despite the changes.

This is a problem where the tool may be interchanged, such as to a tool having a different weight.

It is also a problem if the suspension carries multi-tools, such as (but not limited to) where the multi-tools consist e.g. of a plural of different cutters (for example one being a cylinder cutter and another being a rotary cutter) and where a change of operational tool / cutter is possible such as by rotating the multi-tool cutting head. As the tools may be different in e.g. size the weight distribution differs and thus a change of balance may be required.

FR 22 804 discloses a joint of a trailer vehicle A to the rear of a towing vehicle B, and where the joint includes a shock absorber forming a balancing system. US 6 497 422 discloses a sulky that comprises: a frame comprising at least one formed, structural member extending in a substantially horizontal direction at a first height; a foot platform removably mounted on said frame and projecting downwardly from said frame at least one inch; first and second horizontal axles mounted on and projecting from said frame at said first height; wheels mounted on said axles; and a hitch mounted to said frame for hitching said frame to a towing vehicle, said hitch including at least one left-to-right horizontal shaft to provide for pitch motion and at least one vertical shaft to provide for yaw motion between said sulky and the towing vehicle.

The present invention introduces a suspension to overcome these and related problems.

### SUMMARY OF THE INVENTION

This is solved by introducing a suspension of a tool on a vehicle where the tool is to adapt to changing surface, where the tool is attached to the vehicle by an arm, and where the arm at a first end is connected to the vehicle and the tool is attached to a second end of the arm, and where a first pivot joint is positioned between the vehicle and the tool allowing a rotation around a first pivot axis of the tool relative to the vehicle in a direction of and down relative to the terrain, such that the suspension comprises a balancing system where the balancing system comprises a first part attached to the vehicle and to a position at the arm and where a first adjustable actuating member acts with a first adjustable force on the arm to give an upward rotation of the tool relative to the vehicle around the first pivot joint. This ensures that the balancing may be adjusted to e.g. the weight of the actual tool connected to the suspension.

In relation to e.g. a multi-tool able to swap between different operational tools with different sizes etc. the suspension comprises second pivot joint is positioned at a position between the first pivot joint and the allowing a rotation of the tool relative to the section of the arm between the first and second pivot joints in a direction of and down relative to the terrain, and where the balancing system further comprises a second part attached the arm at a position before the second pivot joint seen relative to the vehicle and a position after the second pivot joint and where a second adjustable actuating member acts with a second adjustable force on the position after the second pivot joint to an downward rotation of the tool relative to section of the arm between the first and second pivot joints.

In order to let the suspension react to the changing levels of the surface whereon the tools operate, the first and/or second actuating members are resilient allowing them to be compressed against their actuation force. This ensures that even though a first and/or second actuating member will tend to push the tool downwards it may be compressed in the direction against its pushing force to adapt to the changes.

### FIGURES

- Fig. 1: Illustrates a vehicle connected to a cutting tool by a suspension.
- Figs. 2A and 2B: Illustrates the suspension according to the present invention.
- Figs. 3A and 3B: Illustrates a multi-tool swapping by a rotation.

### DETAILED DESCRIPTION OF THE INVENTION

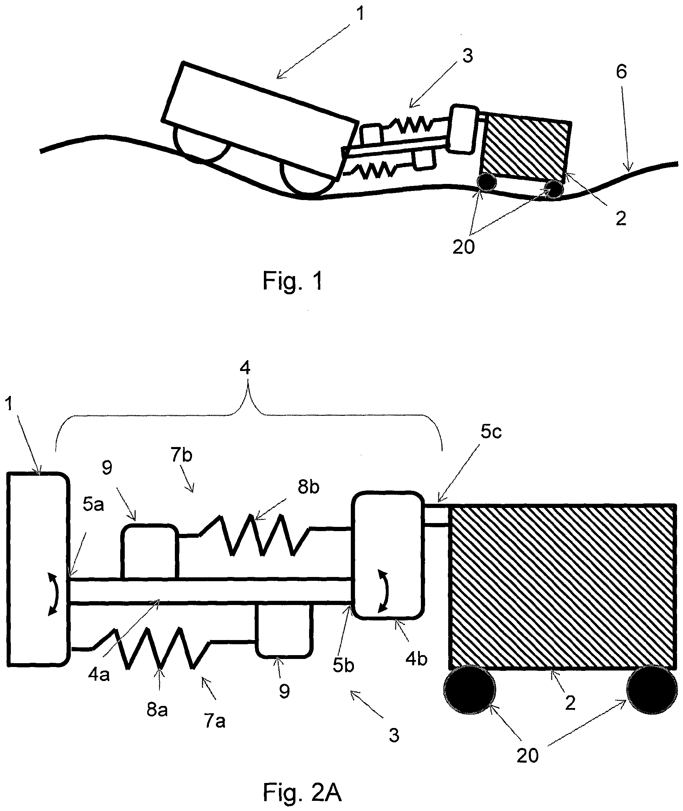

Figure 1 a lawn mower operating on a field having a changing surface, where the lawn mower of the illustration and the example embodiment is a robot mower being controlled e.g. through GPS.

It comprises a main vehicle (1) with engine, wheels and any other devices etc. as is required to operate such a robotic vehicle. Further is comprise at least one tool (2) attached to the vehicle (1) by the suspension (3).

The tool(s) (2) may connect to the surface (6) by wheels (20) (or alternatively rollers etc.), where the surface (6) in general can be any changing terrain such as the surface of a lawn to be mowed, the tool (2) thus being cutters. But other tools (2) and surfaces (6) may also apply to the present invention (e.g. agriculture the tools (2) being harvester or wave energy harvesting where the surface (6) may be e.g. the water surface).

Fig. 2A illustrates the suspension (3) according to the present invention, where the suspension ensures that the tool (2) may adapt to changes in the surface of the terrain experienced by the tool (2) as the vehicle (1) moves along. The tool (2) is attached to the vehicle (1) through the arm (4) where the arm (4) at a first end is connected to the vehicle (1) and to the tool (2) at a second end. A first pivot joint (5a) is positioned between the vehicle (1) and the tool (2) allowing a rotation of the tool (2) relative to the vehicle (1) in a direction of and down relative to the terrain. This first pivot joint (5a) may be at the connection of the arm (4) to the vehicle (1) but could alternatively be positioned somewhere between vehicle (1) and tool (2).

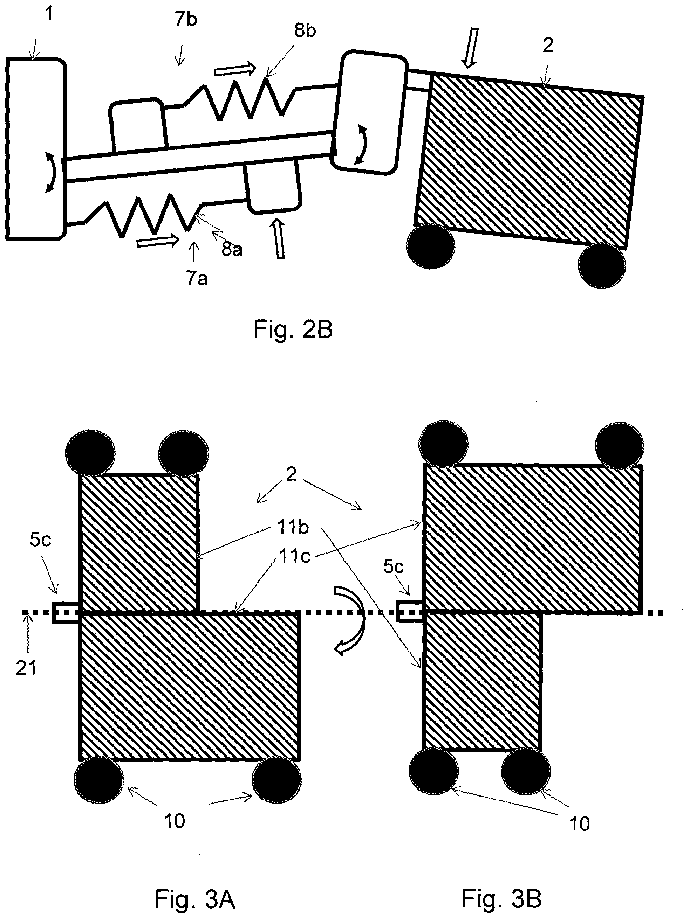

To ensure a correct balancing of the tool (1) in the rotation in the first pivot joint (5a) the suspension (3) comprises balancing system where the balancing system comprises a first part (7a) attached to the vehicle (1) and to a position at the arm (4) and where a first actuating member (8a) acts with a first force on the arm (4) to give an upward rotation of the tool relative to the vehicle (1) around the first pivot joint (5a). The first actuating member (8a) as illustrated in Fig. 2 is positioned below the arm (4) and thus would be a 'pushing member' tending to push the arm (4) upwards, but could alternatively be positioned on top of the arm (4) and thus would be a 'dragging member'. The first actuating member (8a) could be a resilient member such as a spring, a hydraulic actuator, electrically actuator such as an electroactive polymeric actuator or any other member that is able to provide the dragging or pushing force as well as comprising the needed resilience to be able push the arm (4) upwards when its force exceeds other forces acting on the tool (2), and to return back again.

The first part (7a) of the balancing system ensures that the tool (2) may be pushed upwards due to increasing slopes of the terrain surface, but to ensure it in addition may be pushed downwards due to decreasing slopes in the terrain surface a second pivot joint (5b) is positioned at a position between the first pivot joint (5a) and the tool (2) allowing a rotation of the tool (2) relative to the section of the arm (4) between the first (5a) and second (5b) pivot joints in a direction of and down relative to the terrain surface.

To ensure a correct balancing of the tool (1) in the rotation in the second pivot joint (5b) the balancing system comprises a second part (7b) attached the arm (4) at a position before the second pivot joint (5b) seen relative to the vehicle (1) and a position after the second pivot joint (5b) and where a second actuating member (8b) acts with a second force on the position after the second pivot joint (5b) to an downward rotation of the tool (2) relative to section of the arm (4) between the first (5a) and second (5b) pivot joints. The second part (7b) of the balancing system may be build and comprise similar elements as that of the first part (7a), such as the second actuating member (8b) being of the same kind as that the first actuating member (8a), and it may be positioned below or on top of the arm (4), the second actuating member (8b) thus operating to give a pushing or dragging force respectively.

In one embodiment the second part (7b) of the balancing system is directly attached to the tool (2), but alternatively as illustrated in Fig. 2 the arm comprise to parts, the first part (4a) being the section between the first pivot joint (5a) and the second pivot joint (5b) and the second part (4b) being the section between the second pivot joint (5b) and the tool (2), and where the second part (7b) of the balancing system is connected to a position at the first part (4a) and a position at the second part (4b) of the arm (4).

As seen in the illustration of Fig. 2A, to assist the first (8a) and second (8b) actuating members in forming the upwards and downward pushing and dragging, they may be attached to 'elevated' positions (9) at the vehicle (1), arm (4) and / or tool (2) seen relative to a general level of the arm (4).

Together the first (7a) and second (7b) parts of the balancing system ensures that the tool (2) is well balanced in the suspension (3) and making the first and second forces are adjustable ensures that the balancing system may be adjusted to weight of the tools (2) that are attached to the vehicle (1) by suspension (3).

The first part (7a) of the balancing system ensures that the tool (2) may be pushed upwards or downwards due to increasing slopes of the terrain surface (6), as also illustrated in Fig. 2A. However, since the slope of the surface (6) at the vehicle (1) position may be significantly different from the slope at the tool (2) position, the second part (7b) of the balancing system through second pivot joint (5b) ensures the tool (2) may be twisted to adapt to the actual surface (6) slope. This is possible since the first and second actuating members (8a, 8b) has a resilience and thus allows the first part (7a) and the second part (7b) of the balancing system to adapt to the changing surface (6). This however is done either against or with the aid the first and second forces, depending on whether the changes of the surface (6) is against or with the dragging or pushing first and second forces.

The first part (7a) of the balancing system ensures that the tool (2) are balanced in its contact to the surface (6) (optionally through wheels, rollers etc. (20)), neither forcing the tool into the ground nor letting it to lifted from operation contact to of the surface (6) as the surface level (6) changes.

The second part (7b) of the balancing system ensures that the tool (2) contacts the surface (6) evenly distributed by twisting it in the second pivot joint (5b). Having e.g. front and back wheels (20) on the tool (2) this twist enables the suspension (2) to adjust the contact force of the front wheels (20) and back wheels (20) to the surface (6) to substantially equal, the tools (2) thus neither being 'front-heavy' ('nose-heavy') nor 'back-heavy'.

Fig. 3A and 3B illustrates a further aspect according to one embodiment of the present invention where the suspension (4) would be especially suitable.

In this embodiment the tool (2) is a multi-tool as illustrated in Fig. 3 being capable of swapping between the individual tools by a rotation in a third pivot joint (5c) of the tool (2) relative to the arm (4) such that a different of a plural (11a, 11b) operational parts of the tool (2) comes in operational contact with the subject on which it acts, such as the grass of a lawn of the surface (6).

In Fig. 3A the first operational part (11a) (such as e.g. a rotary mower) is in contact position to a surface (6), but by rotating the tool (2) around an axis (21) in the third pivot joint (5c) the tool (2) swaps to the second operational part (11b) (such as e.g. an cylinder mower) (Fig. 3B) as the operational part. As can be seen the first (11a) and second (11b) operational parts have different extensions and different distances between front and back wheels (20), and thus an adjustment is needed to ensure alignment of the forces with which respectively front and back wheels (20) contacts the surface (6). This is done such as by changing the second force and thus the twist in the second pivot joint (5b).

In one embodiment not illustrated the suspension (3) further comprise a pivot connection further is able of forming side-to-side rotation, where this could be one of the first (5a), second (5b) or third (5c) joints.

For many embodiments the tool (2) are not passive such as e.g. a plow, but is propelled by an energy source, such as rotating cutters of a lawn mower being propelled by electricity, hydraulics etc.

The vehicle of the present invention may be operated by a diesel engine, by electricity etc.

## Claims

1. Suspension (3) of a tool (2) on a vehicle (1) where the tool (2) is to adapt to changing surface (6), where the tool (1) is attached to the vehicle (1) by an arm (4), and where the arm (4) at a first end is connected to the vehicle (1) and the tool (2) is attached to a second end of the arm (4), and where a first pivot joint (5a) is positioned between the vehicle (1) and the tool (2) allowing a rotation around a first pivot axis of the tool (2) relative to the vehicle (1) in a direction of up and down relative to the terrain, where the suspension (3) comprises balancing system where the balancing system comprises a first part (7a) attached to the vehicle (1) and to a position at the arm (4) and where a first adjustable actuating member (8a) acts with a first adjustable force on the arm (4) to give an upward rotation of the tool (2) relative to the vehicle (1) around the first pivot joint (5a), **characterized in that** a second pivot joint (5b) is positioned at a position between the first pivot joint (5a) and the tool (2) allowing a rotation of the tool (2) relative to the section of the arm (4) between the first (5a) and second (5b) pivot joints in a direction of up and down relative to the terrain.

2. Suspension (3) according to claim 1, where the balancing system further comprises a second part (7b) attached to the arm (4) at a position before the second pivot joint (5b) seen relative to the vehicle (1) and a position after the second pivot joint (5b) and where a second adjustable actuating member (8b) acts with a second adjustable force on the position after the second pivot joint (5b) to a downward rotation of the tool relative to section of the arm (4) between the first (5a) and second (5b) pivot joints.

3. Suspension (3) according to claim 2, where the second part (7b) of the balancing system is directly attached to the tool (2).

4. Suspension (3) according to claim 2, where the arm (4) comprises two parts (4a, 4b), the first part (4a) being the section between the first pivot joint (8a) and the second pivot joint (8b).

## Patentansprüche

1. Aufhängung (3) eines Werkzeugs (2) an einem Fahrzeug (1), wobei sich das Werkzeug (2) an eine sich ändernde Oberfläche (6) anpassen soll, wobei das Werkzeug (1) durch einen Arm (4) an dem Fahrzeug (1) befestigt ist und wobei der Arm (1) an einem ersten Ende mit dem Fahrzeug (1) verbunden ist und das Werkzeug (2) an einem zweiten Ende des Arms (4) befestigt ist und wobei ein erstes Drehgelenk (5a) zwischen dem Fahrzeug (1) und dem Werkzeug (2) positioniert ist und eine Drehung um eine erste Drehachse des Werkzeugs (2) bezüglich des Fahrzeugs (1) in einer Aufwärts- und Abwärtsrichtung bezüglich des Bodens gestattet, wobei die Aufhängung (3) ein Ausgleichssystem umfasst, wobei das Ausgleichssystem einen ersten Teil (7a) umfasst, der an dem Fahrzeug (1) und an einer Stelle am Arm (4) befestigt ist, und wobei ein erstes einstellbares Betätigungsglied (8a) mit einer ersten einstellbaren Kraft auf den Arm (4) wirkt, um eine Aufwärtsdrehung des Werkzeugs (2) bezüglich des Fahrzeugs (1) um das erste Drehgelenk (5a) zu bewirken, **dadurch gekennzeichnet, dass** ein zweites Drehgelenk (5b) an einer Stelle zwischen dem ersten Drehgelenk (5a) und dem Werkzeug (2) positioniert ist und eine Drehung des Werkzeugs (2) bezüglich des Abschnitts des Arms (4) zwischen dem ersten (5a) und dem zweiten (5b) Drehgelenk in einer Aufwärts- und Abwärtsrichtung bezüglich des Bodens gestattet.

2. Aufhängung (3) nach Anspruch 1, wobei das Ausgleichssystem ferner einen zweiten Teil (7b) umfasst, der an einer Stelle vor dem zweiten Drehgelenk (5b), bezüglich des Fahrzeugs (1) gesehen, und einer Stelle hinter dem zweiten Drehgelenk (5b) an dem Arm (4) befestigt ist und wobei ein zweites einstellbares Betätigungsglied (8b) mit einer zweiten einstellbaren Kraft auf die Stelle hinter dem zweiten Drehgelenk (5b) wirkt, um eine Abwärtsdrehung des Werkzeugs bezüglich des Abschnitts des Arms (4) zwischen dem ersten (5a) und dem zweiten (5b) Drehgelenk zu erzeugen.

3. Aufhängung (3) nach Anspruch 2, wobei der zweite Teil (7b) des Ausgleichssystems direkt an dem Werkzeug (2) befestigt ist.

4. Aufhängung (3) nach Anspruch 2, wobei der Arm (4) zwei Teile (4a, 4b) umfasst, wobei der erste Teil (4a) der Abschnitt zwischen dem ersten Drehgelenk (8a) und dem zweiten Drehgelenk (8b) ist.

## Revendications

1. Suspension (3) d'un outil (2) sur un véhicule (1), l'outil (2) étant prévu pour s'adapter à une surface changeante (6), l'outil (1) étant attaché au véhicule (1) par un bras (4) et le bras (4), à une première extrémité, étant relié au véhicule (1) et l'outil (2) étant attaché à une deuxième extrémité du bras (4), et une première articulation à pivot (5a) étant positionnée entre le véhicule (1) et l'outil (2), permettant une rotation autour d'un premier axe de pivotement de l'outil (2) par rapport au véhicule (1) dans une direction vers le haut et vers le bas par rapport au terrain, la suspension (3) comprenant un système d'équilibrage, le système d'équilibrage comprenant une première partie (7a) attachée au véhicule (1) et à une position au niveau du bras (4) et un premier organe d'actionnement ajustable (8a) agissant avec une première force ajustable sur le bras (4) pour fournir une rotation de l'outil (2) vers le haut par rapport au véhicule (1) autour de la première articulation à pivot (5a), **caractérisée en ce qu'**une deuxième articulation à pivot (5b) est positionnée à une position entre la première articulation à pivot (5a) et l'outil (2), permettant une rotation de l'outil (2) par rapport à la section du bras (4) située entre les première (5a) et deuxième (5b) articulations à pivot dans une direction vers le haut et vers le bas par rapport au terrain.

2. Suspension (3) selon la revendication 1, dans laquelle le système d'équilibrage comprend en outre une deuxième partie (7b) attachée au bras (4) à une position avant la deuxième articulation à pivot (5b), vu par rapport au véhicule (1), et à une position après la deuxième articulation à pivot (5b), et un deuxième organe d'actionnement ajustable (8b) agissant avec une deuxième force ajustable sur la position après la deuxième articulation à pivot (5b) pour produire une rotation de l'outil vers le bas par rapport à la section du bras (4) située entre les première (5a) et deuxième (5b) articulations à pivot.

3. Suspension (3) selon la revendication 2, dans laquelle la deuxième partie (7b) du système d'équilibrage est attachée directement à l'outil (2) .

4. Suspension (3) selon la revendication 2, dans laquelle le bras (4) comprend deux parties (4a, 4b), la première partie (4a) étant la section entre la première articulation à pivot (8a) et la deuxième articulation à pivot (8b).
